# FASCICULE DE BREVET EUROPEEN

(11) **EP 3 133 955 B1**
(45) Date de publication et mention de la délivrance du brevet: **03.06.2020**
(21) Numéro de dépôt: 15718215.5
(22) Date de dépôt: 23.04.2015
(51) Int. Cl.: A45D 34/00, A45D 40/00, B65D 1/02, B32B 27/08, B32B 27/30, B65D 35/12, B32B 27/32

(54) **TUBE EN POLYPROPYLÈNE**
AUS POLYPROPYLEN HERGESTELLTES ROHR
TUBE MADE FROM POLYPROPYLENE

(30) Priorité: 24.04.2014 FR 1453691
(43) Date de publication de la demande: 01.03.2017
(73) Titulaire: Albéa Services, 92230 Gennevilliers (FR)
(72) Inventeur: HINTZ, Martin, 96049 Bamberg (DE); LUNZ, Manfred, 96179 Rattelsdorf (DE); NEUBERGER, Arthur, 96149 Breitengüssbach (DE)
(74) Mandataire: Gevers & Orès
(86) Numéro de dépôt international: PCT/EP2015/058745
(87) Numéro de publication internationale: WO 2015/162191

(56) Documents cités:
- EP-A1- 1 029 793
- EP-A1- 1 190 950
- EP-A1- 1 495 861
- US-B1- 6 511 568
- University Of Lincoln: "Barrier Packaging Options for SME's", , 10 May 2013 (2013-05-10), XP055497955, Retrieved from the Internet: URL:https://www.lincoln.ac.uk/home/media/u niversityoflincoln/holbeach/University,of, Lincoln,-,Jan,2013,Presentation.pdf [retrieved on 2018-08-07]

## Description

La présente invention concerne le domaine des tubes souples pour le stockage et la distribution de produits à consistance liquide ou pâteuse. Elle vise plus particulièrement des applications dans le domaine des tubes pour produits cosmétiques.

Les tubes souples sont communément constitués de deux pièces : une tête de tube comprenant un orifice de distribution pour l'extraction d'un produit contenu dans le tube et une jupe, formant le volume interne du tube adapté pour recevoir le produit.

De façon conventionnelle, la jupe est constituée d'une feuille monocouche ou multicouche à base de matières connues pour présenter des propriétés de résistance mécanique et d'étanchéité satisfaisantes tout en gardant une certaine souplesse. Il s'agit, le plus souvent, de polyéthylène (PE).

De même, la tête de tube est communément réalisée par injection de polyéthylène de manière à avoir une bonne adhésion entre la tête et la jupe qui comprennent le même matériau.

Si la rigidité et la résistance du polyéthylène est suffisante pour des têtes de tube classiques, notamment les têtes de tube comprenant un goulot et une épaule, ces propriétés deviennent insuffisantes lorsque l'on souhaite une tête de tube plus complexe intégrant notamment des fonctions supplémentaires, comme un bouchon relié par une charnière. Pour ce type de tête de tube, un matériau plastique plus rigide, plus dur et plus résistant que celui de la jupe est préféré.

Ainsi, il est connu de fabriquer des tubes dont la jupe est en polyéthylène et la tête de tube en polypropylène (PP). Dans ce type de tubes, il est cependant difficile de lier de manière efficace la jupe et la tête qui sont conçues dans des matériaux différents. Il est bien sûr possible de rajouter des additifs ou de modifier la composition de la tête et/ou de la jupe pour favoriser l'adhésion entre elles mais ces techniques sont complexes et conduisent à des produits ayant une adhésion tête/jupe encore trop faible.

US6511568 décrit un tube comprenant une jupe multicouche et une tête de tube liée à la jupe.

Il existe donc un besoin d'un tube ayant une bonne liaison entre la tête et la jupe tout en gardant une bonne souplesse et une bonne résistante mécanique de la jupe et une bonne rigidité et une bonne solidité de la tête de tube.

A cet effet, la présente invention propose un tube selon la revendication 1.

En réalisant la tête de tube et la jupe dans la même matière plastique, i.e. en polypropylène, on obtient un tube avec une bonne adhésion entre la tête et la jupe dont les risques de désolidarisation sont ainsi limités. Autrement dit, une jupe en polypropylène permet d'avoir également une tête de tube en polypropylène. Celle-ci est alors plus résistante à la manipulation que les têtes de tube classique en polyéthylène. Il est alors possible, par exemple, d'y intégrer des fonctions supplémentaires nécessitants une rigidité et une résistante plus importante. Par ailleurs, il a été constaté par le déposant que des compositions à base de polypropylène peuvent permette à des jupes de tubes de présenter une souplesse satisfaisante.

Selon différents modes de réalisation de l'invention, qui pourront être pris ensemble ou séparément :
- ladite jupe comprend, en outre, un ou plusieurs composants polyéthylène,
- l'un des composants polyéthylène est du polyéthylène obtenu par catalyse métallocène, éventuellement accompagné d'un autre composant polyéthylène sous la forme de polyéthylène non-obtenu par catalyse métallocène,
- le composant polyéthylène obtenu par catalyse métallocène est un copolymère d'éthylène et d'une alpha-oléfine, telle qu'une alpha-oléfine en C3-C20, voire C4-C10 de préférence il s'agit d'un copolymère d'éthylène et d'octène,
- le polypropylène et le ou les composants polyéthylène obtenu par catalyse métallocène sont présents séparément dans au moins deux couches distinctes de la jupe,
- le polyéthylène obtenu par catalyse métallocène est présent dans une couche adjacente à la couche interne,
- la couche comprenant du polyéthylène obtenu par catalyse métallocène est une couche centrale,
- au moins l'une des couches comprend du polyéthylène non-obtenu par catalyse métallocène,
- l'épaisseur de la couche comprenant le polyéthylène non-obtenu par catalyse métallocène représente au moins 1/4 de l'épaisseur totale de la jupe, voire au moins 1/2 de l'épaisseur totale de la jupe,
- le polyéthylène non-obtenu par catalyse métallocène est présent dans une couche externe,
- le polyéthylène non-obtenu par catalyse métallocène est un mélange de polyéthylène basse densité et de polyéthylène basse densité linéaire,
- ledit tube comprend une couche barrière,
- ladite couche barrière est une couche métallique, en aluminium par exemple, et/ou une couche en éthylène-alcool vinylique (EVOH),
- le polypropylène et le polyéthylène obtenu par catalyse métallocène sont présents dans au moins une même couche de la jupe, sous forme de mélange,
- ledit mélange comprend au moins 20%, voire au moins 30%, voire au moins 50% en poids de polyéthylène obtenu par catalyse métallocène,
- ledit mélange comprend au plus 80% voire au plus 70%, voire au plus 50% en poids de polypropylène,
- ladite tête de tube est 100% en polypropylène et ladite jupe est réalisée en polypropylène et en polyéthylène obtenu par catalyse métallocène,
- ladite tête de tube comprend une épaule et un goulot lié à l'épaule.

L'invention concerne aussi un ensemble d'un bouchon et d'un tube tel que décrit précédemment.

Selon différentes caractéristiques de l'invention qui pourront être prises ensemble ou séparément :
- ledit bouchon est issu de matière de la tête de tube,
- ledit bouchon est fixé sur ladite tête de tube,
- ledit bouchon est fixé sur ledit goulot de ladite tête de tube,
- ledit bouchon est fixé par encliquetage et/ou vissage.

D'autres caractéristiques, buts et avantages de l'invention ressortiront de la description qui suit, qui est purement illustrative et non limitative, et qui doit être lue en regard des dessins annexés, sur lesquels :
- La figure 1 présente de façon schématique une vue en coupe partielle d'un ensemble d'un bouchon et d'un tube selon un aspect de l'invention,
- La figure 2 présente de façon schématique une vue en coupe partielle d'une jupe multicouche selon un aspect de l'invention.

Sur l'ensemble des figures, les éléments communs sont repérés par des références numériques identiques.

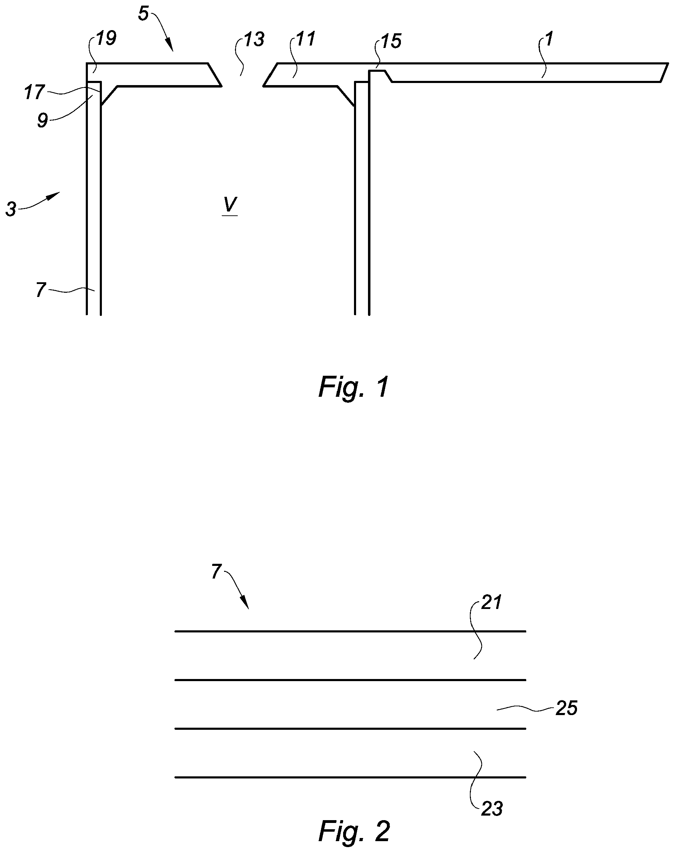

La figure 1 présente partiellement un ensemble d'un bouchon 1 et d'un tube 3 pour produit, notamment produit cosmétique, à consistance liquide, pâteuse ou sous forme de gel, selon un aspect de l'invention. Le tube 3 comprend :
- une tête de tube 5,
- une jupe 7 présentant une extrémité proximale 9 liée à la tête de tube 5 et une extrémité distale opposée (non représenté) et formant un volume interne V adapté pour recevoir le produit.

Dans ce mode de réalisation, ladite tête de tube 5 comprend une paroi transversale 11 plate s'étendant dans un plan orthogonal à l'axe de la jupe 7, et munie d'un orifice de distribution 13 du produit contenu dans le volume interne V du tube 3. Ladite tête de tube 5 est reliée au bouchon 1 par l'intermédiaire d'une charnière 15.

Ladite tête de tube 5 peut comprendre en outre un insert (non représenté ici) disposé au contact de la paroi transversale 11, typiquement au contact d'une face de la paroi transversale 11 orientée vers le volume interne V du tube 3 défini par la jupe 7.

Typiquement ledit insert est formé d'un matériau multicouche comprenant une couche barrière limitant l'infiltration et la fuite des composants indésirables au travers de la tête du tube. Les inserts communément utilisés sont composés de deux couches de matériau plastique entourant la couche barrière intermédiaire. Les deux couches de matériau plastique servent à isoler la couche métallique du produit contenu dans le tube, qui est susceptible de la détériorer. La couche barrière comprend typiquement une couche métallique et/ou une couche en éthylène-alcool vinylique (EVOH).

La tête comprend une surface d'attachement 17 à laquelle l'extrémité proximale 9 de la jupe 7 est liée et une portion annulaire 19 supérieure située en périphérie de la tête 5 recouvrant la bordure de l'extrémité proximale 9 de la jupe 7.

La jupe 7 est liée à la tête de tube 5 soit en surmoulant la tête de tube 5 sur la jupe 7, soit par soudage ou collage en assemblant la jupe 7 sur la tête de tube 5 formée préalablement, notamment par injection ou par injection compression, ou par toutes autres techniques.

Selon l'invention, ladite jupe 7 et ladite tête de tube 5 comprennent du polypropylène (PP).

De préférence, le polypropylène est un homopolymère (PPH) ou un copolymère de polypropylène, notamment un copolymère statistique (*Random copolymer* - PPR), ou leur mélange. Le type de polypropylène de la tête de tube 5 pourra être identique ou différent de celui de la jupe 7.

Le polypropylène est avantageusement un polymère avec des propriétés mécaniques, notamment de rigidité, de dureté et de résistance plus importante que celles du polyéthylène. Ainsi, la tête de tube 5 en polypropylène permet d'être plus résistante à la manipulation que les têtes de tube classique en polyéthylène. Le fait que la tête 5 et la jupe 7 comprennent toutes deux du polypropylène permet d'obtenir une bonne adhésion entre elles et limite les risques de désolidarisation.

Le polypropylène est présent dans une couche interne de la jupe 7 en contact avec la tête de tube 5.

De façon avantageuse, ladite jupe 7 comprend, en outre, un ou plusieurs composants polyéthylène. Le polyéthylène à l'avantage d'apporter de la souplesse à la jupe 7 du tube 3.

L'un de ces composants polyéthylène est préférentiellement du polyéthylène obtenu par catalyse métallocène (PEm).

Un polyéthylène obtenu par catalyse métallocène est un polyéthylène obtenu par une réaction de polymérisation à base d'un système catalytique organométallique comme un métallocène. Les métallocènes et de telles réactions de polymérisation sont connus de l'homme du métier.

De façon avantageuse, le polyéthylène obtenu par catalyse métallocène est un copolymère d'éthylène et d'une alpha-oléfine, telle qu'une alpha-oléfine en C3-C20. De préférence il s'agit d'un copolymère d'éthylène et d'octène.

De préférence, la masse volumique du polyéthylène obtenu par catalyse métallocène, mesurée selon la norme ASTM D792, est comprise entre 0.890 et 0.920 g/cm³, de préférence entre 0.900 et 0.915 g/cm³. De préférence, l'indice de fluidité, mesurée selon la norme ASTM D1238 à 190 °C en utilisant une charge de 2,16 kg, est compris entre 0,1 et 10 g/10 min, de préférence entre 0,1 et 5 g/10 min. Il peut s'agir par exemple d'un copolymère d'une gamme de copolymères vendue par la compagnie Dow sous le nom d'Affinity.

Ce polyéthylène obtenu par catalyse métallocène peut éventuellement être additionné de polyéthylène non-obtenu par catalyse métallocène. De façon avantageuse, le polyéthylène non-obtenu par catalyse métallocène est un mélange de polyéthylène basse densité (PEBD) et de polyéthylène basse densité linéaire (PEBD-L). De préférence, le mélange comprend entre 20 et 80%, voire entre 20 et 50% de PEBD et entre 80 et 20%, voire entre 80 et 50% de PEBD-L, de préférence le mélange comprend 30% de PEBD et 70% de PEBD-L.

Dans un premier mode de réalisation de la jupe 7, représenté figure 2, ladite jupe 7 est une jupe multicouche dans laquelle le polypropylène et le composant polyéthylène obtenu par catalyse métallocène sont présents séparément dans au moins deux couches distinctes de la jupe 7.

Dans ce mode de réalisation, il s'agit notamment d'une multicouche comprenant trois couches principales superposées : une couche interne 21 orientée vers l'intérieur du volume interne V du tube 3, une couche externe 23 orientée vers l'extérieur du tube 3 et une couche centrale 25 située entre la couche interne 21 et la coucher externe 23.

Ladite couche interne 21 correspond à la couche de la jupe 7 en contact avec la tête de tube 5 et le polypropylène est présent dans ladite couche interne 21 de la jupe 7. Ladite tête 5 est ainsi rapportée sur ladite jupe 7 de façon à être en contact avec ladite couche interne 21. Une telle configuration permet d'avoir un contact entre deux matières à base de polypropylène et une bonne adhésion entre-elles.

Si le mode de réalisation comprend du polyéthylène non-obtenu par catalyse métallocène, celui-ci est présent, de préférence, dans une couche externe 23. Cette couche permet d'apporter de la souplesse à la jupe 7 du tube 3, et une apparence (brillance et transparence, par exemple) et un touché agréables à l'utilisateur se rapprochant d'une jupe entièrement en polyéthylène. La couche externe 23 peut également comprendre du polypropylène.

Le polyéthylène obtenu par catalyse métallocène est, quant à lui, présent dans une couche adjacente à la couche interne 21. Ici, cette couche est ladite couche centrale 25. Elle permet d'apporter non seulement de la souplesse à la jupe 7 mais également une bonne adhésion entre la couche polypropylène et une autre couche polyéthylène, notamment la couche externe 23.

Dans un second mode de réalisation, non représenté, la jupe 7 peut être une bicouche constituée d'une couche interne 21 et d'une couche externe 23. Ladite couche interne 21 correspond à la couche de la jupe 7 en contact avec la tête de tube 5 et le polypropylène est présent dans ladite couche interne 21 de la jupe 7. Comme décrit précédemment, une telle configuration permet d'avoir une jupe 7 et une tête 5 en contact par l'intermédiaire de deux matières à base de polypropylène, permettant une bonne adhésion entre-elles. Dans le cas d'une jupe 7 comprenant du polyéthylène obtenu par catalyse métallocène, celui-ci est présent de préférence dans la couche externe 23 adjacente à la couche interne 21. Cette couche à base de polyéthylène apporte de la souplesse à la jupe 7 et une apparence et un touché agréables. Il est également possible que la couche externe 23 comprenne du polypropylène.

Ainsi, dans ce mode de réalisation, la tête de tube 5 peut être 100% en polypropylène (par exemple un copolymère statistique de polypropylène) et la jupe 7 peut être réalisée en polyéthylène obtenu par catalyse métallocène et en polypropylène, par exemple un copolymère statistique de polypropylène. La jupe 7 est une multicouche, obtenue par exemple par coextrusion, dont la couche interne est en polypropylène et la couche externe en polyéthylène obtenu par catalyse métallocène. Une telle jupe présente une brillance et une souplesse se rapprochant d'une jupe tout en polyéthylène. La jupe 7 et la tête de tube 5 formée préalablement peuvent être assemblées par soudage, par exemple par soudage à l'air chaud.

Dans un troisième mode de réalisation, non représenté, la jupe 7 peut être une multicouche comprenant une couche barrière. Il peut s'agir, par exemple, d'une couche en éthylène-alcool vinylique (EVOH) et/ou d'une couche métallique telle qu'une couche en aluminium. La couche barrière est de préférence une couche centrale située entre une couche interne et une couche externe. Comme décrit précédemment dans le premier mode de réalisation, ladite couche interne 21 correspond à la couche de la jupe 7 en contact avec la tête de tube 5 et le polypropylène est, de préférence présent dans la couche interne pour être en contact avec la tête de tube 5 en polypropylène et assurer une bonne adhésion entre la jupe 7 et la tête 5. La couche externe peut comprendre du polypropylène et/ou du polyéthylène pour assurer de la souplesse à la jupe 7.

La multicouche peut comprendre des couches d'adhésion entre les couches principales, notamment dans le cas d'une multicouche comprenant une couche barrière. Il peut s'agir par exemple de polypropylène et/ou de polyéthylène modifiés.

De manière plus générale, l'épaisseur de la couche comprenant le polyéthylène non-obtenu par catalyse métallocène représente au moins 1/4 de l'épaisseur totale de la jupe 7, voire au moins 1/2 de l'épaisseur totale de la jupe 7.

La jupe 7 multicouche peut être obtenue par coextrusion ou lamination.

Dans un quatrième mode de réalisation, non représenté et non conforme à l'invention, la jupe 7 peut être monocouche. Cette couche correspond à la couche de la jupe 7 en contact avec la tête de tube 5. Elle peut comprendre seulement du polypropylène ou un mélange de polypropylène et d'un ou plusieurs composants polyéthylène. Le polyéthylène peut être un polyéthylène obtenu par catalyse métallocène. Ledit mélange comprend au moins 20%, voire au moins 30%, voire au moins 50% en poids de polyéthylène obtenu par catalyse métallocène et/ou au plus 80% voire au plus 70%, voire au plus 50% en poids de polypropylène.

### Exemples de tubes 3 selon l'invention :

Dans les exemples donnés plus bas, les épaisseurs sont uniquement données à titre indicatif et peuvent varier.

**Exemple 1 :**

| | | Matière | Epaisseur |
|---|---|---|---|
| Jupe: | Couche interne | PPR | 100-150 µm |
| | Couche externe | PEm | 200-250 µm |
| Tête : | Monocouche | PPR | |

**Exemple 2 :**

| | | Matière | Epaisseur |
|---|---|---|---|
| Jupe: | Couche interne | PPR | 100-150 µm |
| | Couche centrale | PEm | 50-100 µm |
| | Couche externe | PEBD/PEBD-L | 100-150 µm |
| Tête : | Monocouche | PPR ou PPH | |

**Exemple 3 :**

| | | Matière | Epaisseur |
|---|---|---|---|
| Jupe: | Couche interne | PPR | 100-200 µm |
| | Couche centrale | PEm | 100-200 µm |
| | Couche externe | PPR | 100-200 µm |
| Tête : | Monocouche | PPR | |

**Exemple 4 :**

| | | Matière | Epaisseur |
|---|---|---|---|
| Jupe: | Couche interne | PPR | 150-200 µm |
| | Couche d'adhésion | PP modifié | 10-20 µm |
| | Couche centrale | EVOH | 10-50 µm |
| | Couche d'adhésion | PP modifié | 10-20 µm |
| | Couche externe | PPR | 150-200 µm |
| Tête : | Monocouche | PPR | |

**Exemple 5 : non conforme à l'invention.**

| | | Matière | Epaisseur |
|---|---|---|---|
| Jupe : | Monocouche | PPR | 200-400 µm |
| Tête : | Monocouche | PPR ou PPH | |

**Exemple 6 : non conforme à l'invention.**

| | | Matière | Epaisseur |
|---|---|---|---|
| Jupe : | Monocouche | PPR/PEm 80 : 20 | 200-400 µm |
| Tête : | Monocouche | PPR | |

**Exemple 7 : non conforme à l'invention.**

| | | Matière | Epaisseur |
|---|---|---|---|
| Jupe : | Monocouche | PPR/PEm 70 : 30 | 200-400 µm |
| Tête : | Monocouche | PPR | |

**Exemple 8 : non conforme à l'invention.**

| | | Matière | Epaisseur |
|---|---|---|---|
| Jupe : | Monocouche | PPR/PEm 50 : 50 | 200-400 µm |
| Tête : | Monocouche | PPR | |

Il est à noter que des variantes de réalisation sont bien sûr possibles et que la présente invention ne se limite pas à un ensemble d'un bouchon et d'un tube tel que décrit précédemment, i.e. un bouchon issu de matière d'une tête de tube comprenant une paroi transversale plate. Notamment, il est possible d'étendre la présente invention à d'autres types de têtes de tube, en particulier les têtes de tube classique comprenant une épaule et un goulot lié à l'épaule. En outre, ledit bouchon peut être dissociable de la tête de tube sous la forme d'une capsule-service. Il peut être fixé alors sur ladite tête de tube, notamment sur ledit goulot, par encliquetage et/ou vissage.

## Revendications

1. Tube (3) pour produit, notamment produit cosmétique, à consistance liquide, pâteuse ou sous forme de gel comprenant :
- une tête de tube (5),
- une jupe (7) présentant une extrémité proximale (9) liée à la tête de tube (5) et une extrémité distale opposée et formant un volume interne (V) adapté pour recevoir le produit,
ladite jupe (7) et ladite tête de tube (5) comprenant du polypropylène,
ladite jupe (7) étant multicouche, et
du polypropylène étant présent dans une couche interne (21) de la jupe (7) et la tête (5) est rapportée sur ladite jupe (7) de façon à être en contact avec ladite couche interne (21).

2. Tube (3) selon la revendication 1, dans lequel du polypropylène et du polyéthylène obtenu par catalyse métallocène sont présents séparément dans au moins deux couches distinctes de la jupe (7).

3. Tube (3) selon la revendication 2, dans lequel du polyéthylène obtenu par catalyse métallocène est présent dans une couche adjacente à la couche interne (21).

4. Tube (3) selon l'une quelconque des revendications 2 ou 3, dans lequel la couche comprenant du polyéthylène obtenu par catalyse métallocène est une couche centrale (25).

5. Tube (3) selon l'une quelconque des revendications précédentes, dans lequel au moins l'une des couches comprend du polyéthylène non-obtenu par catalyse métallocène et l'épaisseur de l'une des couches comprenant du polyéthylène non-obtenu par catalyse métallocène représente au moins 1/4 de l'épaisseur totale de la jupe (7).

6. Tube (3) selon l'une quelconque des revendications précédentes, dans lequel du polyéthylène non-obtenu par catalyse métallocène est présent dans une couche externe (23).

7. Tube (3) selon l'une quelconque des revendications précédentes, dans lequel ladite jupe (7) comprend, en outre, un ou plusieurs composants polyéthylène.

8. Tube (3) selon la revendication précédente, dans lequel l'un des composants polyéthylène est du polyéthylène obtenu par catalyse métallocène, éventuellement accompagné d'un autre composant polyéthylène sous la forme de polyéthylène non-obtenu par catalyse métallocène.

9. Tube (3) selon l'une quelconque des revendications précédentes, dans lequel la jupe (7) comprend une couche formée d'un mélange de polypropylène et de polyéthylène obtenu par catalyse métallocène.

10. Tube (3) selon la revendication précédente, dans lequel le mélange comprend au moins 20% en poids de polyéthylène obtenu par catalyse métallocène.

11. Tube (3) selon l'une quelconque des revendications 9 et 10, dans lequel le mélange comprend au plus 80% en poids de polypropylène.

12. Ensemble d'un bouchon (1) et d'un tube (3) selon l'une des revendications précédentes.

13. Ensemble selon la revendication 12, dans lequel le bouchon (1) est issu de matière de la tête de tube (5).

## Patentansprüche

1. Tube (3) für ein Produkt, insbesondere ein Kosmetikprodukt, mit flüssiger, pastöser Konsistenz oder in Form von Gel, umfassend:
- einen Tubenkopf (5),
- einen Mantel (7), der ein proximales Ende (9), das mit dem Tubenkopf (5) verbunden ist, und ein gegenüberliegendes distales Ende aufweist und ein Innenvolumen (V) bildet, das angepasst ist, um das Produkt aufzunehmen,
wobei der Mantel (7) und der Tubenkopf (5) Polypropylen umfassen,
wobei der Mantel (7) mehrschichtig ist und
wobei Polypropylen in einer Innenschicht (21) des Mantels (7) vorhanden ist und der Kopf (5) so auf dem Mantel (7) angebracht ist, dass er mit der Innenschicht (21) in Kontakt ist.

2. Tube (3) nach Anspruch 1, wobei Polypropylen und Polyethylen, das durch Metallocen-Katalyse erhalten wird, getrennt in mindestens zwei verschiedenen Schichten des Mantels (7) vorhanden sind.

3. Tube (3) nach Anspruch 2, wobei Polyethylen, das durch Metallocen-Katalyse erhalten wird, in einer Schicht vorhanden ist, die an die Innenschicht (21) angrenzt.

4. Tube (3) nach einem der Ansprüche 2 oder 3, wobei die Schicht, die Polyethylen, das durch Metallocen-Katalyse erhalten wird, umfasst, eine Mittelschicht (25) ist.

5. Tube (3) nach einem der vorstehenden Ansprüche, wobei mindestens die eine der Schichten Polyethylen, das nicht durch Metallocen-Katalyse erhalten wird, umfasst und die Dicke der einen der Schichten, die Polyethylen, das nicht durch Metallocen-Katalyse erhalten wird, umfassen, mindestens 1/4 der Gesamtdicke des Mantels (7) ausmacht.

6. Tube (3) nach einem der vorstehenden Ansprüche, wobei Polyethylen, das nicht durch Metallocen-Katalyse erhalten wird, in einer Außenschicht (23) vorhanden ist.

7. Tube (3) nach einem der vorstehenden Ansprüche, wobei der Mantel (7) weiter einen oder mehrere Polyethylenbestandteile umfasst.

8. Tube (3) nach dem vorstehenden Anspruch, wobei der eine der Polyethylenbestandteile Polyethylen, das durch Metallocen-Katalyse erhalten wird, ist, eventuell begleitet von einem anderen Polyethylenbestandteil in Form von Polyethylen, das nicht durch Metallocen-Katalyse erhalten wird.

9. Tube (3) nach einem der vorstehenden Ansprüche, wobei der Mantel (7) eine Schicht umfasst, die von einem Gemisch aus Polypropylen und Polyethylen, das durch Metallocen-Katalyse erhalten wird, gebildet wird.

10. Tube (3) nach dem vorstehenden Anspruch, wobei das Gemisch mindestens 20 Gew.-% Polyethylen, das durch Metallocen-Katalyse erhalten wird, umfasst.

11. Tube (3) nach einem der Ansprüche 9 und 10, wobei das Gemisch mindestens 80 Gew.-% Polypropylen umfasst.

12. Montage aus einem Verschluss (1) und einer Tube (3) nach einem der vorstehenden Ansprüche.

13. Montage nach Anspruch 12, wobei der Verschluss (1) aus dem Material des Tubenkopfs (5) stammt.

## Claims

1. Tube (3) for a product, in particular a cosmetic product, with liquid or pasty consistency, or in the form of a gel, comprising:
- a tube head (5),
- a skirt (7) having a proximal end (9) connected to the tube head (5) and an opposite distal end and forming an inner space (V) adapted to receive the product,
said skirt (7) and said tube head (5) comprising polypropylene,
said skirt (7) being multi-layered, and
polypropylene being present in an inner layer (21) of the skirt (7) and the head (5) being provided on said skirt (7) so as to be in contact with said inner layer (21).

2. Tube (3) according to claim 1, wherein polypropylene and polyethylene obtained by metallocene catalysis are present separately in at least two separate layers of the skirt (7).

3. Tube (3) according to claim 2, wherein polyethylene obtained by metallocene catalysis is present in a layer adjacent to the inner layer (21).

4. Tube (3) according to any one of claims 2 or 3, wherein the layer comprising polyethylene obtained by metallocene catalysis is a central layer (25).

5. Tube (3) according to any one of the preceding claims, wherein at least one of the layers comprises polyethylene not obtained by metallocene catalysis and the thickness of one of the layers comprising polyethylene not obtained by metallocene catalysis represents at least 1/4 of the total thickness of the skirt (7).

6. Tube (3) according to any one of the preceding claims, wherein polyethylene not obtained by metallocene catalysis is present in an outer layer (23).

7. Tube (3) according to any one of the preceding claims, wherein said skirt (7) further comprises one or more polyethylene components.

8. Tube (3) according to the preceding claim, wherein one of the polyethylene components is polyethylene obtained by metallocene catalysis, possibly accompanied by another polyethylene component in the form of polyethylene not obtained by metallocene catalysis.

9. Tube (3) according to any one of the preceding claims, wherein the skirt (7) comprises a layer formed of a polypropylene and polyethylene mixture obtained by metallocene catalysis.

10. Tube (3) according to the preceding claim, wherein the mixture comprises at least 20% by weight of polyethylene obtained by metallocene catalysis.

11. Tube (3) according to any one of claims 9 and 10, wherein the mixture comprises at most 80% by weight of polypropylene.

12. Assembly of a stopper (1) and of a tube (3) according to one of the preceding claims.

13. Assembly according to claim 12, wherein the stopper (1) is made of material of the tube head (5).
